(19) Europäisches Patentamt
European Patent Office
Office européen des brevets

(11) **EP 1 981 062 A1**

(12) **EUROPEAN PATENT APPLICATION**
published in accordance with Art. 158(3) EPC

(43) Date of publication:
**15.10.2008 Bulletin 2008/42**

(51) Int Cl.:
**H01J 65/00** (2006.01)    **H05B 41/24** (2006.01)

(21) Application number: **07707398.9**

(86) International application number:
**PCT/JP2007/051151**

(22) Date of filing: **25.01.2007**

(87) International publication number:
**WO 2007/086453 (02.08.2007 Gazette 2007/31)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **25.01.2006 JP 2006015897**

(71) Applicant: **MATSUSHITA ELECTRIC INDUSTRIAL
CO., LTD.
Osaka 571-8501 (JP)**

(72) Inventors:
• **HATAOKA, Shin'ichiro**
c/o Matsushita Electric Industrial Co., Ltd
2-1-61 Shiromi, Chuo-ku
Osaka 540-6207 (JP)

• **HIROHASHI, Masaki**
c/o Matsushita Electric Industrial Co., Ltd
2-1-61 Shiromi, Chuo-ku
Osaka 540-6207 (JP)

(74) Representative: **Ehlers, Jochen et al
Eisenführ, Speiser & Partner
Patentanwälte Rechtsanwälte
Postfach 10 60 78
28060 Bremen (DE)**

(54) **DIELECTRIC BARRIER DISCHARGE LAMP, BACKLIGHT, AND LIQUID CRYSTAL DISPLAY**

(57)    A dielectric barrier discharge lamp 100 has an internal electrode 11 inside a bulb 10, and an external electrode 12 outside the bulb 10. Lamp capacity C0 per inner surface area of the bulb between the internal electrode and external electrode is set to less than 2.8 nF/m². By setting lamp capacity C0 within this range, lamp efficiency η, which is a value obtained by dividing an output luminous flux of the lamp by an power inputted to the lamp, is remarkably increased.

Fig.1A

EP 1 981 062 A1

**Description**

TECHNICAL FIELD

The present invention relates to a dielectric barrier discharge lamp, and more particularly to a lamp structure for improving lamp efficiency.

BACKGROUND ART

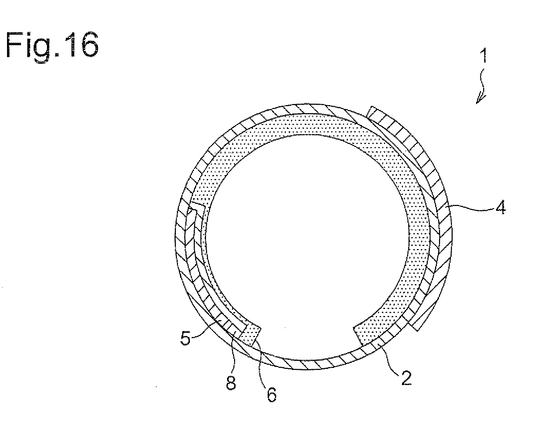

In addition to lamps using mercury as a discharge medium (referred to hereinbelow as mercury-containing lamps), lamps using no mercury (referred to hereinbelow as mercury-free lamps) have been abundantly studied as lamps for such devices as backlight devices for liquid crystal display devices. The mercury-free lamps are preferable because of environmental standpoint and small fluctuation in light emission intensity under the effect of temperature changes with time. Lamps of a "dielectric barrier type" in which discharge is performed via a tubular wall of a light emitting tube enclosing a rare gas have been mainly used as the mercury-free lamps.
Meanwhile, since a higher brightness is required for the liquid crystal display devices, and a higher brightness is also strongly required for the backlight devices used in the liquid crystal display devices.
Patent Publication 1 discloses a technology aimed at brightness increase (increase in level of illumination) in the dielectric barrier discharge lamps. Fig. 16 is a schematic cross-sectional view of a rare gas fluorescent lamp 1 disclosed in Patent Publication 1. The rare gas fluorescent lamp 1 comprises an external electrode 4 and an internal electrode 5 on a glass bulb 2. A dielectric layer 8 is provided on the internal electrode 5, and a fluorescent layer 6 is provided thereupon. Patent Document 1 teaches that illuminance of the rare gas fluorescent lamp 1 is increased by making a surface area of the external electrode 4 larger than that of the internal electrode 5. Further, Patent Document 1 teaches that as for electrostatic capacity, the lamp illuminance can be further increased where an electrostatic capacity formed between the internal electrode 5 and a discharge space is less that the electrostatic capacity formed between the external electrode 4 and the discharge space.
[Patent Publication 1]
Japanese Patent Application Laid-open Publication No. 2002-208379 (Paragraphs [0021] to ]0024], Fig. 6).

DISCLOSURE OF THE INVENTION

PROBLEM TO BE SOLVED BY THE INVENTION

However, the results of comprehensive research conducted by the present inventors on a "lamp efficiency (1m/W)", which is a value obtained by dividing an output luminous flux of the lamp by an electric power inputted to the lamp, demonstrated that the relationship between the values of the "electrostatic capacity formed between the internal electrode 5 and the discharge space" and the "electrostatic capacity formed between the external electrode 4 and the discharge space", such as taught in Patent Document 1, is not related to the lamp efficiency.
The present invention is based on newly discovered knowledge, and it is an object of the present invention to provide a dielectric barrier discharge lamp with high lamp efficiency as well as a backlight device and a liquid crystal display device using the same.

MEANS FOR SOLVING THE PROBLEM

The present inventors have newly discovered that, in a dielectric barrier discharge lamp, a lamp capacity per inner surface area of a bulb between a pair of electrodes set less than a certain value greatly increases a lamp efficiency, which is a value obtained by dividing an output luminous flux of the lamp by an electric power inputted to the lamp.
Specifically, a first aspect of the present invention provides a dielectric barrier discharge lamp comprising a bulb enclosing a discharge medium containing a rare gas; and a first electrode and a second electrode arranged for the bulb; wherein a lamp capacity per inner surface area of the bulb between the first and second electrodes is less than $2.8 \text{ nF/m}^2$. By setting the lamp capacity per inner surface area of the bulb to less than $2.8 \text{ nF/m}^2$, the lamp efficiency is greatly increased.
It is even more preferred that the lamp capacity per inner surface area of the bulb be set to less than $2.4 \text{ nF/m}^2$.
Specifically, the first electrode is arranged inside the bulb, and the second electrode is arranged outside the bulb. The second electrode is preferably arranged at a distance from the bulb.
The lamp capacity per inner surface area of the bulb is determined by physical configuration of the dielectric barrier discharge lamp, that is, a capacity (permittivity or dielectric constant and thickness) of a tube wall of the bulb and a clearance distance between the second electrode and the bulb. As for the capacity of the tube wall of the bulb, changing the dielectric constant requires changing the material, and materials with a dielectric constant lower than that of the air are presently unknown. Therefore, it is not that easy to adjust the capacity of the tube wall of the bulb to a desired value. Accordingly, it is preferred that the lamp capacity per inner surface area of the bulb is adjusted by adjusting the clearance distance between the second electrode and the bulb.

Considering a voltage applied to the lamp in addition to the lamp capacity determined by the physical configuration as described above, the present inventor have newly discovered that a discharge charge quantity per one discharge and per inner surface area of the bulb between the pair of electrodes less than a certain value greatly increases the lamp efficiency.

Specifically, a second aspect of the present invention provides a dielectric barrier discharge lamp comprising a bulb enclosing a discharge medium containing a rare gas, a first electrode and a second electrode arranged for the bulb, and a lighting circuit for applying an alternating voltage between the first and second electrodes so as to repeatedly generate dielectric discharge for causing light emission by plasmanizing the rare gas, wherein a discharge charge quantity per one discharge and per inner surface area of the bulb between the first and second electrodes is less than 29 $\mu$C/m$^2$.

More specifically, a peak-to-peak value of a voltage applied by the lighting circuit between the first and second electrodes is 1.25 kV or more and 3.2 kV or less.

Further, the first electrode is arranged inside the bulb, and the second electrode is arranged outside the bulb. The second electrode is preferably arranged at a distance from the bulb.

EFFECT OF THE INVENTION

According to the dielectric barrier discharge lamp of the first aspect of the present invention, the lamp efficiency can be greatly increased by setting a lamp capacity per inner surface area of the bulb to less than 2.8 nF/m$^2$. According to the dielectric barrier discharge lamp of the second aspect of the present invention, the lamp efficiency can be greatly increased by setting a discharge charge quantity per one discharge and per inner surface area of the bulb to less than 29.0 $\mu$C/m$^2$.

BRIEF DESCRIPTION OF THE DRAWINGS

Fig. 1A is a schematic cross-sectional view along an axial direction of a dielectric barrier discharge lamp device 100 (an external electrode no-contact type) of an embodiment of the present invention;
Fig. 1B is a cross-sectional view along a line I-I in Fig. 1A;
Fig. 2 is a schematic cross-sectional view in a direction perpendicular to the tube axis of a dielectric barrier discharge lamp device 100 (of an external electrode contact type) of the embodiment;
Fig. 3 is an equivalent circuit of the dielectric barrier discharge lamp device 100 of the embodiment of the present invention;
Fig. 4A is a schematic cross-sectional view of an arrangement for measuring lamp capacity and discharge charge quantity;
Fig. 4B is an equivalent circuit diagram of the arrangement shown in Fig. 4A;
Fig. 5 is a V-Q Lissajous waveform figure;
Fig. 6A is a schematic cross-sectional view in a direction perpendicular to a tube axis of a dielectric barrier discharge lamp comprising a U-shaped external electrode;
Fig. 6B is a schematic cross-sectional view along the tube axis direction of the dielectric barrier discharge lamp comprising the U-shaped external electrode;
Fig. 7A is a schematic cross-sectional view in a direction perpendicular to a tube axis of a dielectric barrier discharge lamp comprising a parabolic external electrode;
Fig. 7B is a schematic cross-sectional view along the tube axis direction of the dielectric barrier discharge lamp comprising the parabolic external electrode;
Fig. 8 is a schematic cross-sectional view in a direction perpendicular to a tube axis of a dielectric barrier discharge lamp comprising a plate-shaped external electrode;
Fig. 9 is a schematic cross-sectional view in the direction perpendicular to a tube axis of a dielectric barrier discharge lamp comprising a external electrode composed of a linear wire;
Fig. 10A is a schematic cross-sectional view in a direction perpendicular to a tube axis of a dielectric barrier discharge lamp comprising an external electrode of an inverted V shape;
Fig. 10B is a schematic cross-sectional view along the tube axis direction of the dielectric barrier discharge lamp comprising the external electrode of the inverted V shape;

Fig. 11A is a schematic cross-sectional view in the direction perpendicular to a tube axis of a dielectric barrier discharge lamp comprising a plate-shaped external electrode;

Fig. 11B is a schematic cross-sectional view along the tube axis direction of the dielectric barrier discharge lamp comprising the plate-shaped external electrode;

Fig. 12A is a schematic cross-sectional view in a direction perpendicular to a tube axis of a dielectric barrier discharge lamp comprising an external electrode composed of a wire wound around the bulb with spaces and a flat plate.

Fig. 12B is a schematic cross-sectional view along the tube axis direction of the dielectric barrier discharge lamp comprising the external electrode composed of the wire wound around the bulb with spaces and a flat plate;

Fig. 13A is a schematic cross-sectional view in a direction perpendicular to a tube axis of a dielectric barrier discharge lamp comprising an external electrode composed of a wire wound around a bulb with spaces;

Fig. 13B is a schematic cross-sectional view along the tube axis direction of the dielectric barrier discharge lamp comprising the external electrode composed of the wire wound around the bulb with spaces;

Fig. 14 is a graph showing the relationship between lamp capacity and lamp efficiency;

Fig. 15 is a graph showing the relationship between discharge charge quantity and lamp efficiency; and

Fig. 16 is a cross-sectional view of the conventional rare gas fluorescent lamp 1.

DESCRIPTION OF REFERENCE NUMERALS

| | |
|---|---|
| 100, 300: | dielectric barrier discharge lamp device |
| 10: | bulb |
| 12: | external electrode |
| 12a: | flat plate |
| 12b: | wire |
| 13: | fluorescent layer |
| 14: | lighting circuit |
| 15: | ground |
| 17: | holding member |
| 700: | backlight device |
| 701: | diffusion plate |
| 702: | diffusion sheet |
| 703: | prism sheet |
| 704: | polarization sheet |
| 705: | casing |
| 800: | liquid crystal panel |
| 900: | liquid crystal display device |

BEST MODE FOR CARRYING OUT THE INVENTION

Embodiments of the present invention will be described below in detail.

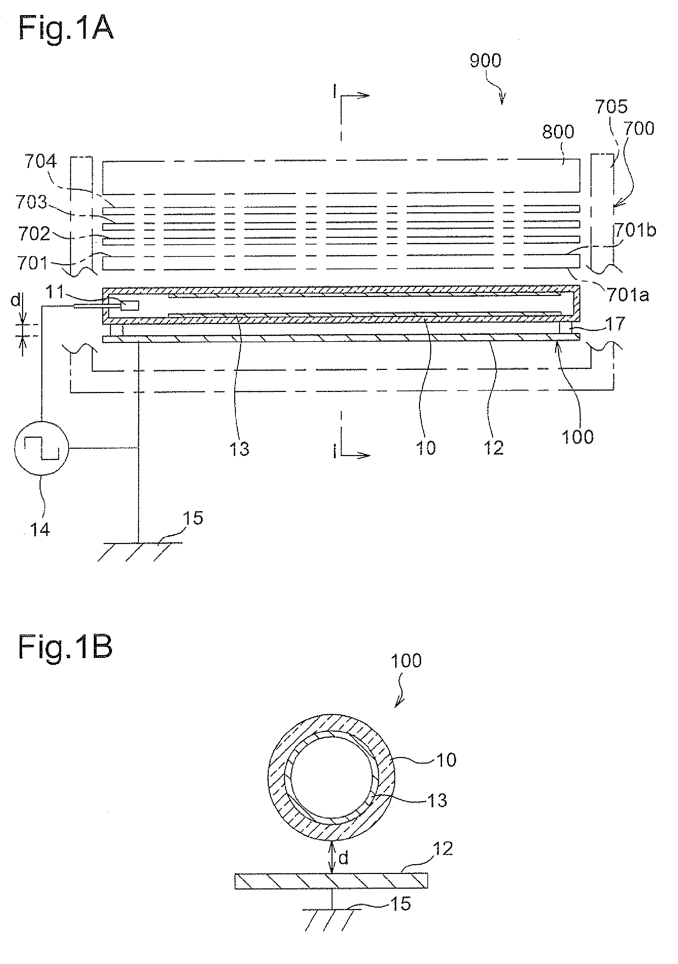

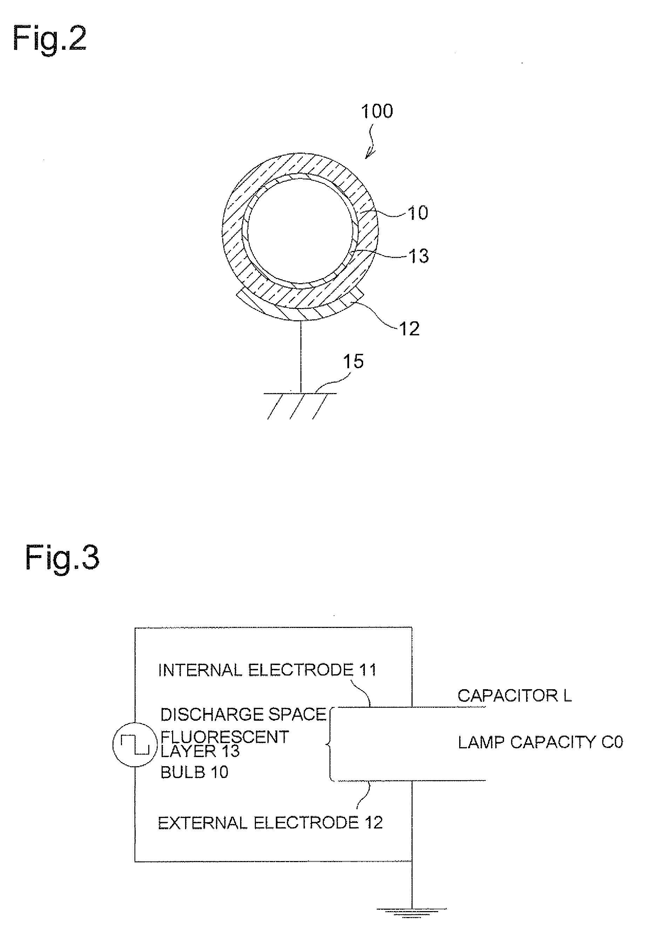

A dielectric barrier discharge lamp device 100 of an embodiment of the present invention is shown in Fig. 1A and Fig. 1B. As described latter in greater detail, in accordance with the present invention, lamp efficiency is greatly increased by setting a lamp capacity (per unit surface area of an inner surface of the lamp), which is an electrostatic capacity between a pair of electrodes, of a dielectric barrier discharge lamp to an adequate value. Further, in accordance with the present invention, in addition to the lamp capacity, which is determined by a physical configuration of the lamp, a voltage applied to the lamp is considered. Specifically, also by setting a discharge charge quantity per one discharge and per unit surface area of the inner surface of the bulb between the electrodes to an adequate value, the lamp efficiency is greatly increased. As long as the lamp capacity and/or discharge charge quantity are set within the predetermined ranges, a basic structure in which an external electrode 12 is disposed at a distance from the bulb 10 (external electrode non-contact type), as in the dielectric barrier discharge lamp device 100 shown in Figs. 1A, 1B, or a basic structure in which the external electrode 12 is closely contacted with the bulb 10 (external electrode contact type), as in Fig. 2, may be used.

A pair of electrodes, namely, an internal electrode (first electrode) 11 and the external electrode (second electrode) 12 are disposed for the light-emitting tube or bulb 10. In the present embodiment, the internal electrode 11 is disposed at one end of the bulb 10. The external electrode 12 is disposed outside the bulb 10. More specifically, the external electrode 12 extends in a longitudinal direction (tube axis direction) of the bulb 10 and faces an outer circumferential surface of the bulb 10 via a clearance created by a holding member 17. The shortest distance between the external electrode 12 and outer circumferential surface of the bulb 10 (clearance distance "d") is constant in the longitudinal direction of the bulb 10. A rare gas (not shown in the figure) is enclosed inside the bulb 10, and a fluorescent layer 13 is coated on the inner surface of the bulb 10. A lighting circuit 14 is electrically connected to the internal electrode 11 and external electrode 12. The lighting circuit 14 applies a rectangular waveform voltage to the internal electrode 11 and external electrode 12. One output terminal of the lighting circuit 14 is connected to a ground 15.

A small-diameter tube that has high strength and can be easily mass produced is generally used as the bulb 10. Material for the bulb 10 includes glasses such as borosilicate glass, quartz glass, soda glass, and lead glass. An outer diameter of the bulb 10 is usually set to but not limited to approximately 1.0 mm to 10.0 mm. For example, a bulb with a diameter of approximately 30 mm that has been used in fluorescent lamps for general-type illumination may be employed. The bulb 10 does not necessarily have a linear shape; L-shaped, U-shaped, or rectangular bulb may be also used.

The bulb 10 is sealed, and a discharge medium (not shown in the figures) is enclosed therein. The discharge medium is at least one type of gas comprising a rare gas as a main component. A pressure of the gas enclosed in the bulb 10, that is, the pressure inside the lamp of the dielectric barrier discharge lamp device 100 is approxiamtely 0.1 kPa to 76.0 kPa.

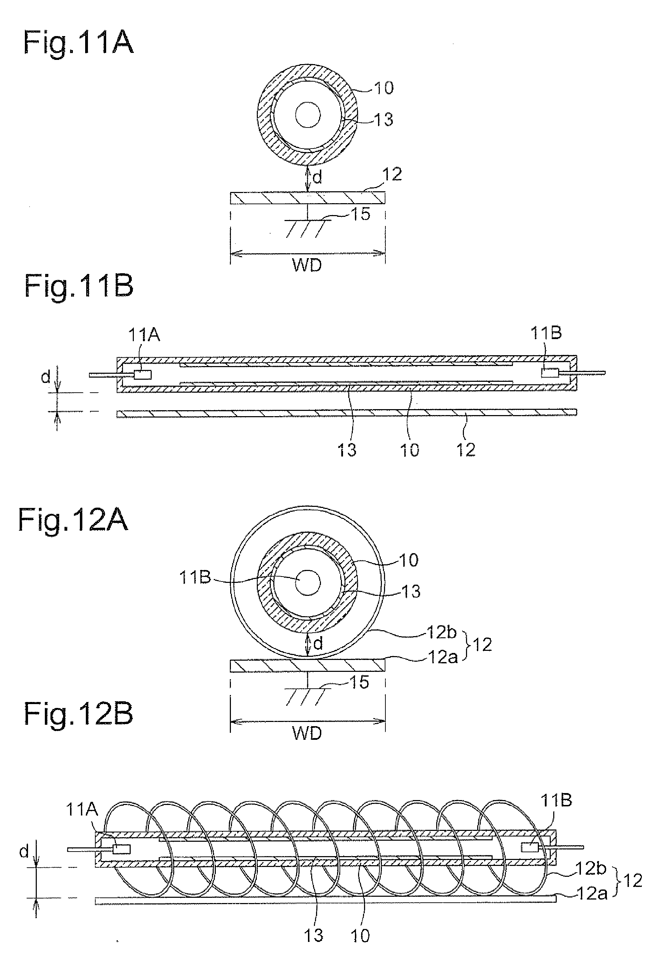

The internal electrode 11 is formed inside at one end of the bulb 10. The internal electrode 11 can be formed from a metal, for example, tungsten or nickel. A surface of the internal electrode 11 may be coated partially or entirely with a layer of metal oxide such as cerium oxide, barium oxide, and strontium oxide. Such metal oxide layer reduces the lighting start voltage and prevents deterioration of electrodes caused by ion collisions. The internal electrode 11 may be disposed at both ends rather than only at one end (refer to latter-described Fig. 11B, Fig. 12B, and Fig. 13B).

The external electrode 12 can be formed from a metal such as copper, aluminum, and stainless steel or a transparent conductive structure comprising tin oxide or indium oxide as the main component. By using the external electrode 12 that has been subjected to mirror finish reflection processing, light emitted from the bulb 10 to the external electrode 12 can be reflected with high efficiency and a high light extraction efficiency be realized, even without arranging a high-reflection sheet between the external electrode 12 and the bulb 10.

The fluorescent layer 13 is formed to convert a wavelength of the light emitted by the discharge medium. Light of various wavelengths can be obtained by varying the material of the fluorescent layer 13. For example, white light or light of red, green, and blue color can be obtained. The fluorescent layer 13 can be formed from such material as those for the so-called fluorescent lamps for general-type illumination or plasma displays.

The lighting circuit 14 applies the rectangular wavelength voltage between the internal electrode 11 and external electrode 12.

Applying the rectangular waveform voltage is generally preferred for the dielectric barrier discharge because lamp efficiency (a value obtained by dividing the output luminous flux from the bulb 10 by the power input to the bulb 10) is increased. The voltage waveform is not limited to the rectangular waveform and may be a sine wave or the like as long as the bulb 10 can be lighted. By the voltage applied by the lighting circuit 14, a dielectric barrier discharge is repeatedly generated via the wall of bulb 10 so that the rare gas is plasmanized to emit light.

Methods for measuring an electrostatic capacity "C0" (referred to hereinbelow as "lamp capacity C0"), discharge charge quantity per one discharge "Q0", and lamp efficiency "η" of a lamp section of the dielectric barrier discharge lamp device 100 will be described below.

Fig. 3 shows an equivalent circuit of the dielectric barrier discharge lamp device 100. The lamp capacity "C0" of the lamp portion of the dielectric barrier discharge lamp device 100 is equivalent to the electrostatic capacity of a capacitor (referred to hereinbelow as "capacitor L") in which a dielectric material, the fluorescent material 13, and the bulb 10 which function as a discharge space are sandwiched between the internal electrode 11 and external electrode 12.

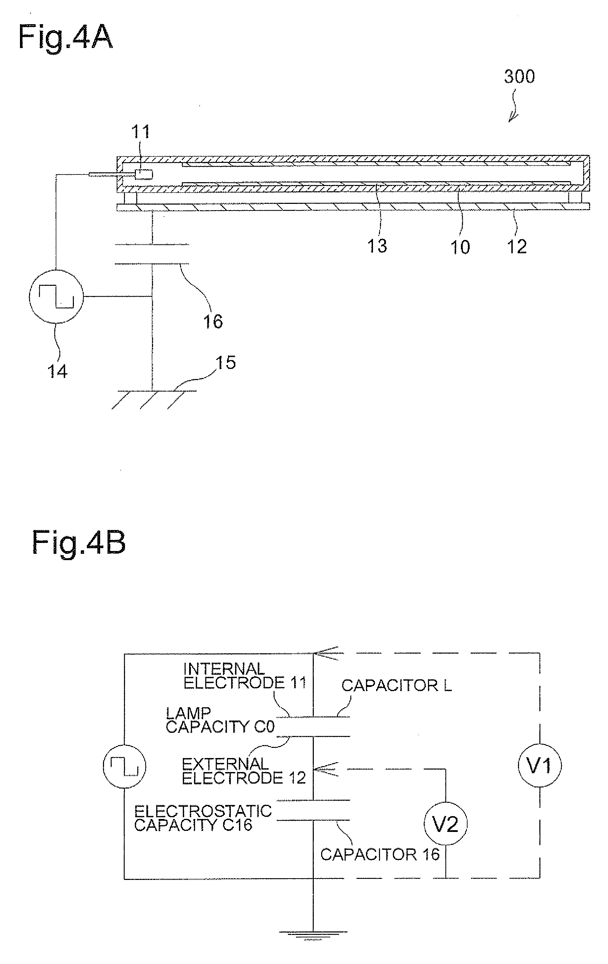

The lamp capacity "C0" and lamp efficiency "η" can be calculated using the dielectric barrier discharge lamp device 300 shown in Fig. 4A. Fig. 4A is a schematic cross-sectional view of the dielectric barrier discharge lamp device 300, and Fig. 4B is an equivalent circuit diagram for the dielectric barrier discharge lamp device 300 in Fig. 4A. The dielectric barrier discharge lamp device 300 differs from the dielectric barrier discharge lamp device 100 shown in Fig. 1A and Fig. 1B in that a capacitor 16 is connected between the external electrode 12 and ground 15 so as to be in serial with the lamp capacity "C0". Elements identical to those of the dielectric barrier discharge lamp device 100 are assigned with identical reference symbols and explanation thereof will be omitted.

In the equivalent circuit of Fig. 4B, a voltage probe "V1" and a voltage probe "V2" are respectively connected to a position where the total voltage of lamp capacity "C0" and electrostatic capacity "C 16" can be measured and a position where the electrostatic capacity "C16" can be measured. In order to decrease influences on the voltage applied to the lamp, the electrostatic capacity "C 16" of capacitor 16 is made larger than the lamp capacity "C0". For example, where the lamp capacity "C0" is approximately several tens of picofarads (pF), the capacitor 16 with the electrostatic capacity C16 of approximately several tens of nanofarads (nF) is used.

In the above-described arrangement, the rectangular waveform voltage is applied from the lighting circuit 14, and voltages "V1" and "V2" are measured after the bulb 10 has been lighted. As described later in detail, the bulb is lighted with an alternating current voltage having a peak-to-peak value (p-p value) of several kilovolts and a frequency of approximately 20 to 30 kHz (for certain lamps the frequency may be of an order of several tens of kilohertz). A voltage (lamp voltage) "V0" (= V1 - V2) applied to the internal electrode 11 and external electrode 12 is calculated from the measured voltages "V1" and "V2". Further, because the capacitor 16 is connected in serial with the capacitor "L" composed of the lamp, the electric charge "Q" (= C16 x V2) accumulated in the capacitor "L" is calculated from the electrostatic capacity "C16" of capacitor 16 and voltage "V2".

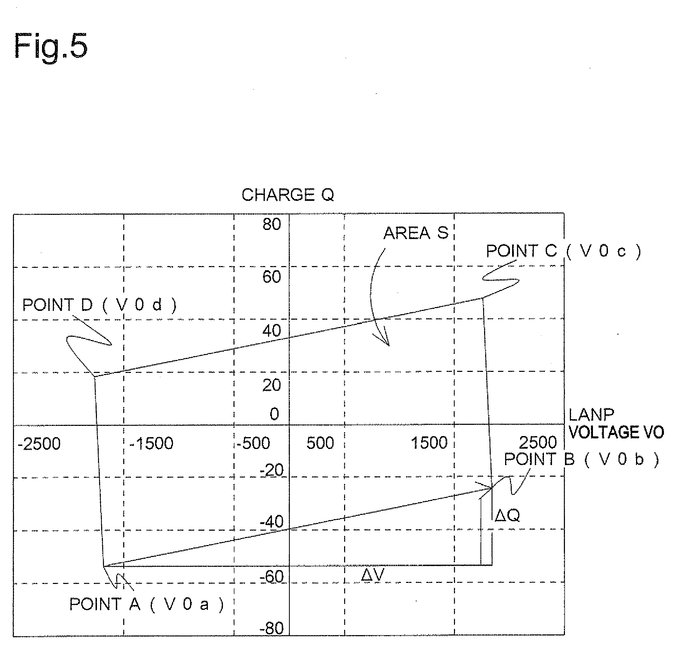

Fig. 5 shows a V-Q Lissajous waveform figure in which the lamp voltage "V0" and electric charge "Q" calculated in the above-described manner are plotted against the ordinate and abscissa, respectively. Here, a lamp power "W" is represented by a product of a lamp current "I" and the lamp voltage "V0", that is, by a product of electric charge quantities "Q" flowing per unit time and the lamp voltage "V0". Therefore, as shown by Formula (1) below the lamp power "W" is equivalent to a value obtained by multiplying a drive frequency "f" by a surface area "S" bounded by points ABCD in the V-Q Lissajous waveform figure shown in Fig. 5.

$$W = S \times f \qquad (1)$$

Here, paths from the point "A" to point "B" and from the point "C" to point D show changes in the accumulation of electric charges "Q" in the capacitor "L" and the lamp voltages "V0" immediately after abrupt changes in the rectangular waveform voltage, whereas paths from the point "B" to point "C" and from point "D" to point "A" represent the accumulation of electric charges "Q" in the capacitor "L" and lamp voltages "V0" from starts to ends of the discharge in the discharge space.

Meanwhile, because the lamp capacity "C0" is a value obtained by dividing the variation of electric charge "Q" by the variation of voltage "V0", the lamp capacity can be calculated from an inclination of the path between the point "A" and point "B". However, since the external electrode 12 extends along the longitudinal direction of the bulb 10, the lamp capacity "C0" differs depending on the length of bulb 10. In other words, it can be assumed that identical capacitors connected in parallel are arranged in the longitudinal direction. Even with the same electrode configuration, if the tube diameter of the bulb 10 increases, the accumulated electric charge quantities increase corresponding to the increase in the internal surface area. Thus, if the tube diameter increases, the lamp capacity substantially increases. Accordingly, in order to evaluate lamp capacity by excluding the size of the bulb 10, a value obtained by dividing the lamp capacity "C0" by the inner surface area "SL" of the bulb 10 is determined as a lamp capacity per inner surface area "C0". The lamp capacity per inner surface area "C0" is represented by following Formula (2). In this Formula (2), ΔQ and ΔV respectively represent variations of electric charge and lamp voltage from the point "A" to point "B" (from the point "C2 to point "D").

$$C0 = \frac{\Delta Q}{\Delta V \times SL} \qquad (2)$$

Where the total luminous flux quantity outputted from the dielectric barrier discharge lamp device 300 is denoted by "Φ", the lamp efficiency "η" can be calculated by following Formula (3) using Formula (1).

$$\eta = \frac{\Phi}{W} \qquad (3)$$

Variations of electric charge "Q" from the point "B" to point "C" and from the point "D" to point "A" are electric charges moving inside the discharge space due to one discharge. The accumulated quantity of the electric charge "Q" within the paths from point B to point C and from point D to point A is defined as a discharge charge quantity per one discharge "Q0".

The lamp voltage "V0" at the point "B" and point "C" is denoted by "V0b", and "V0c", respectively, and an average voltage value thereof is denoted by "V0bc". Sanitarily, the lamp voltage V0 at the point "D" and point "A" is denoted by "V0d" and "V0a", respectively, and the average voltage value thereof is denoted by "V0da" Because the variations of lamp voltage "V0" from the point "B" to point "C" and from the point "D" to point "A" are small, the discharge charge quantity "Q0" is approximately equivalent to a value obtained by dividing the surface area "S" by "V0bcda" obtained by subtracting the average voltage value "V0da" from the average voltage value "V0bc" as represented by the following Formula (4).

$$Q0 = \frac{S}{V0bcda} \qquad (4)$$

However, because the bulb 10 has a certain size, the discharge charge quantity "Q0" differs depending on length and tube diameter of the bulb 10. Accordingly, in order to evaluate the discharge charge quantity by excluding influence of the size of the inner surface area "SL" of the bulb "10", the value obtained by dividing the discharge charge quantity "Q0" by the inner surface area "SL" is defined as a discharge charge quantity per one discharge and per inner surface area "q0" as shown in Formula (5) below.

$$q0 = \frac{Q0}{SL} \qquad (5)$$

With the above-described Formulas (1) to (5), the lamp capacity per inner surface area "C0", discharge charge quantity per inner surface area and one discharge "q0", and lamp efficiency "η" can be calculated by using the V-Q Lissajous waveform figure in the dielectric barrier discharge lamp device 300 shown in Fig. 4A.

(Experiment)

In order to study relationship among the lamp efficiency "η", lamp capacity C0, and discharge charge quantity "q0", dielectric barrier discharge lamps with various lamp capacities "C0" were fabricated for measuring the lamp capacity "C0" discharge charge quantity "q0", and lamp efficiency "η".

Possible methods for changing the lamp capacity per inter surface area "C0" include changing the clearance distance "d" between the bulb 10 and the external electrode 12 (corresponding to a distance between the external electrode 12 and the discharge space), changing a thickness of the tube wall of the bulb 10 (determined by the difference between an outer diameter and inner diameter of the bulb 10), and changing dielectric constant by changing the material constituting the bulb 10. However, changing the dialectic constant by changing the material constituting the bulb 10 is not necessarily easy because no material with a dielectric constant lower than that of the air is presently known. Accordingly, in the present experiment, the lamp capacity "C0" was changed by changing the clearance distance "d" between the bulb 10 and external electrode 12 for external electrodes 12 of various shapes. Further, for changing the lamp capacity "C0", bulbs 10 with different thicknesses of tube walls were used.

Changing the lamp capacity "C0" as well as changing the input voltage value can be considered for changing the discharge charge quantity per inner surface area and per one discharge "q0 ". However, because the input voltage has to be set so as to stabilize the discharge and maintain lighting performance, the range in which the input voltage can be regulated is narrow. Accordingly, in the present experiment, the discharge charge quantity "q0" was mainly changed by changing the lamp capacity "C0", and a p-p value of the input voltage was set within a range of 1.25 kV or more and 3.2 kV or less so as to be within a range of values generally necessary to maintain lighting performance.

A total of fourteen types of external electrodes 12 with numbers from No. 1 to No. 14, as shown in Table 1 below, were used.

[Table 1]

| External Electrode No. | Shape | Clearance Distance (mm) | Area S (mm2) | Note |
|---|---|---|---|---|
| 1 | U-Shape | 0.5 | 16.4 | Figs. 6A, 6B |
| 2 | U-Shape | 0.9 | 15.6 | Figs. 6A, 6B |

(continued)

| External Electrode No. | Shape | Clearance Distance (mm) | Area S (mm2) | Note |
|---|---|---|---|---|
| 3 | U-Shape | 1.7 | 18.0 | Figs. 6A, 6B |
| 4 | U-Shape | 2.5 | 19.6 | Figs. 6A, 6B |
| 5 | U-Shape | 3.3 | 21.2 | Figs. 6A, 6B |
| 6 | Parabolic Shape | 3.1 | 13.0 | Figs. 7A, 7B |
| 7 | Flat Plate | 3.1 | 13.0 | Fig. 8 |
| 8 | Linear Wire | 3.1 | 1.0 | Fig. 9 |
| 9 | Inverted V Shape | 3.1 | 13.0 | Figs. 10A, 10B |
| 10 | Flat Plate (W=5mm) | 6.5 | | Figs. 11A, 11B |
| 11 | Flat Plate (W=6mm) & Spiral Wire | 6.5 | | Figs. 12A, 12B |
| 12 | Flat Plate (W=15) | 6.5 | | Figs. 11A, 11B |
| 13 | Flat Plate (W=15mm) & Spiral Wire | 6.5 | | Figs. 12A, 12B |
| 14 | Spiral Wire | 6.5 | | Figs. 13A, 13B |

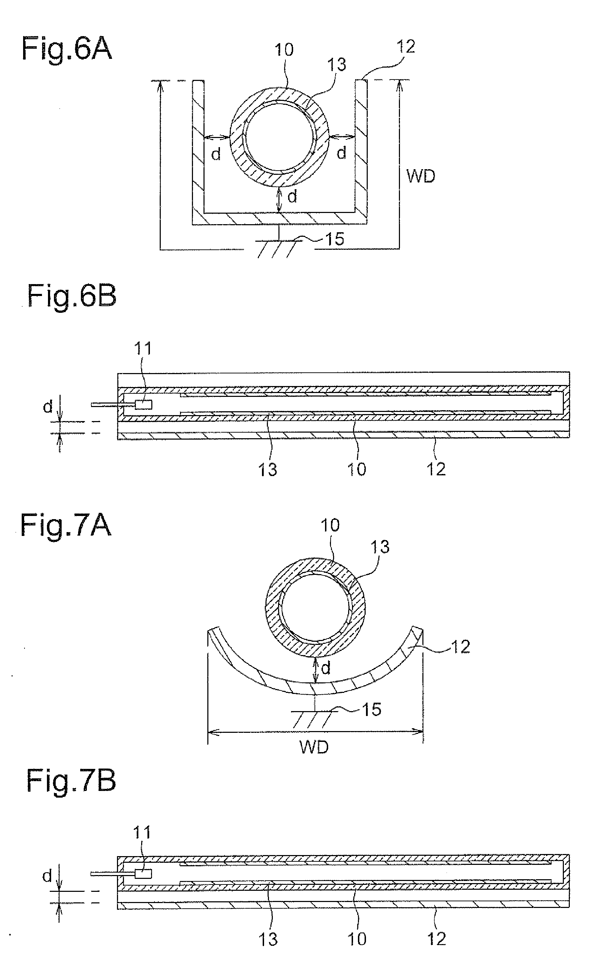

As shown in Fig. 6A and Fig. 6B, the cross section of external electrodes 12 of No. 1 to No. 5 has a "U-shape". Where the shortest distance between the three planes of the external electrode 12 constituting the "U-shape" and the bulb 10 is defined as the clearance distance "d", the external electrode 12 is disposed so that the clearance distance "d" is the same for all the planes. The clearance distance "d" for the external electrodes 12 of No. 1 to No. 5 is 0.5 mm, 0.9 mm, 1.7 mm, 2.5 mm, and 3.3 mm, respectively. A width "WD" is defined as a sum total of widths of three wall portions constituting the "U-shape". The width "WD" in the external electrodes 12 of No. 1 to No. 5 is 16.4 mm, 15.6 mm, 18.0 mm, 19.6 mm, and 21.2 mm, respectively.

As shown in Fig. 7A and Fig. 7B, the cross section of external electrodes 12 of No. 6 has a "parabolic shape". The clearance distance "d" is defined as the shortest distance between a bottom portion of the parabolic shape of the external electrode 12 and the bulb 10. The clearance distance "d" in the external electrode 12 of No. 6 is 3.1 mm and the width "WD" is 13.0 mm.

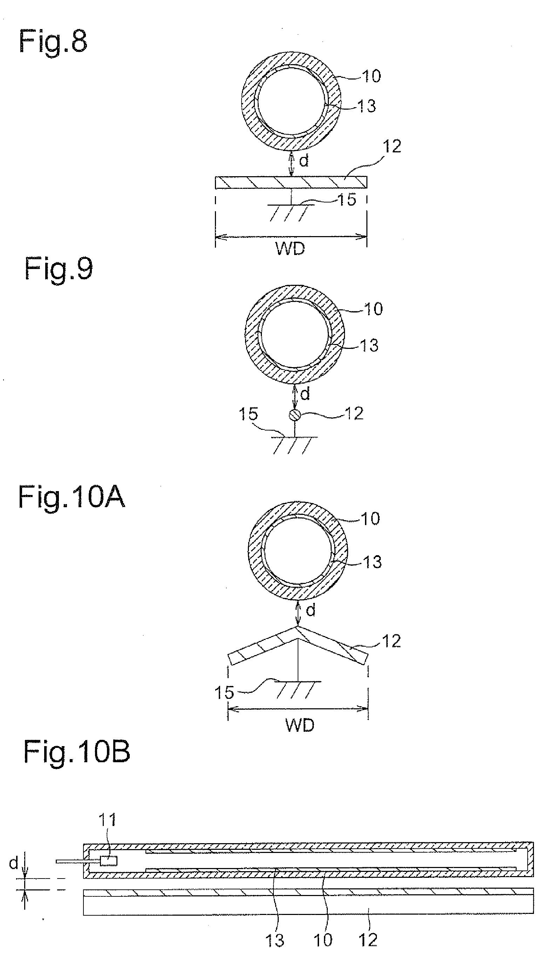

As shown in Fig. 8, the external electrode 12 of No. 7 is a flat plate with the width "WD" of 13.0 mm disposed along the longitudinal direction of the bulb 10 and has a cross-sectional shape of a "linear shape". The clearance distance "d" is defined as the shortest distance between the linear shape of the cross section of the external electrode 12 and the bulb 10. The clearance distance "d" in the external electrode 12 of No. 7 is 3.1 mm.

As shown in Fig. 9 the external electrode 12 of No. 8 is a linear wire disposed along the longitudinal direction of the bulb 10 and has a round cross-sectional shape. The clearance distance "d" is defined as the shortest distance between the round shape of the cross section of external electrode 12 and the bulb 10. The clearance distance "d" in the external electrode 12 of No. 8 is 3.1 mm. In the case of using wire, the width "WD" is 0.30 mm which is a wire diameter.

As shown in Fig. 10A and Fig. 10B, the cross section of the external electrode 12 of No. 9 has an "inverted V shape". Here, the clearance distance "d" is defined as the shortest distance between an apex point of the inverted V shape of external electrode 12 and the bulb 10. The clearance distance "d" of the external electrode 12 of No. 8 is 3.1 mm and the width "WD" is 13.0 mm.

As shown in Fig. 11A and Fig. 11B, the external electrodes 12 of No. 10 and No. 12 are flat plates with a width "WD" of 5 mm and 15 mm, respectively, disposed along the longitudinal direction of the bulb 10. The clearance distance "d" is 6.5 mm for both electrodes.

As shown in Fig. 12A and Fig. 12B, the external electrodes 12 of No. 11 and No. 13 comprise a flat plate 12a disposed along the longitudinal direction with a certain distance from the bulb 10 and a spiral wire 12b wound with a constant pitch around the bulb 10 so as to be electrically contacted with the flat plate 12a. The width "WD" of the flat plate 12a of the external electrodes of No. 11 and No. 13 is 5 mm and 15 mm, respectively. The clearance distance "d" is 6.5 mm in both No 11. and No. 12.

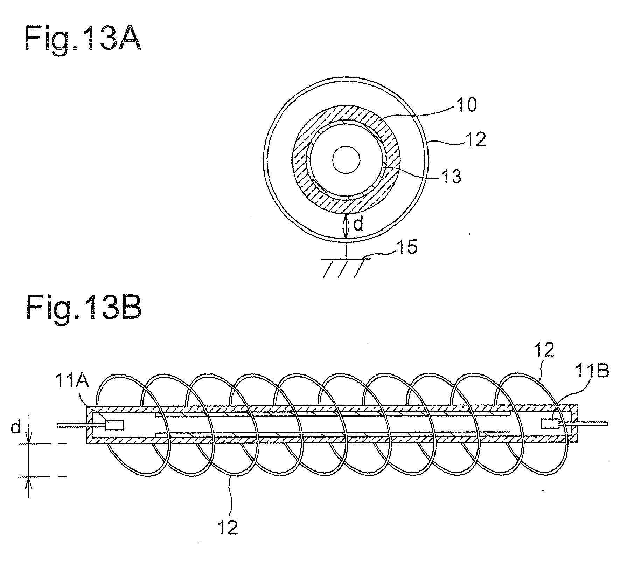

As shown in Fig. 13A and Fig. 13B, the external electrode 12 of No. 14 is a spiral wire 12b wound with a constant pitch around the bulb 10. The clearance distance "d" is 6.5 mm.

Bulbs 10 of four types were used. More specifically, the four types includes a straight tube with an outer diameter of 2.6 mm, an inner diameter of 2.0 mm, a tube wall thickness of 0.3 mm, and a length of 160 mm (bulb 10 of No. 1), a straight tube with an outer diameter of 3.0 mm, an inner diameter of 2.0 mm, a tube wall thickness of 0.5 mm, and a length of 160 mm (bulb 10 of No. 2), a straight tube with an outer diameter of 3.0 mm, an inner diameter of 2.0 mm, a tube wall thickness of 0.5 mm, and a length of 370 mm (bulb 10 of No. 3), and a straight tube with an outer diameter of 4.0 mm, an inner diameter of 3.0 mm, a tube wall thickness of 0.5 mm, and a length of 370 mm (bulb 10 of No. 4). In bulbs 10 of No. 1 and No. 2, the internal electrode 11 is disposed only at one end (refer to Fig. 1A, Fig. 6B, Fig. 7B, and Fig. 10B). On the other hand, in the bulbs 10 of No. 3 and No. 4, the internal electrodes 11A, 11B are disposed at both ends (refer to Fig. 11B, Fig. 12B, and Fig. 13B).

The lamp voltage "V0" and charge "Q" were measured under the conditions shown in Tables 2 to 4, and the lamp capacity "C0" per inner surface area of bulb 10, discharge charge quantity "q0" per inner surface area, and lamp efficiency "η" were calculated by the V-Q Lissajous waveform figure. As for other conditions, a mixed gas comprising xenon 60% and argon 40% was enclosed in the bulb 10 under a pressure of 20 kPa. The main component of the external electrode 12 was Al, and the surface of the external electrode 12 was coated with Ag to provide it with the reflection function. The total luminous flux and lamp power were measured by disposing the dielectric barrier discharge lamps inside an integrating sphere and lighting the lamps with a high-voltage pulse power source (SBP-5K-HF-1 from Haidenlaborary). The lighting circuit 14 comprising the high-voltage pulse power source had a positive-negative alternative rectangular drive waveform.

[Table 2]

| Experimet No.. | Outer Electrode No.. | Clearance Distance (mm) | Internal Electrode | Bulb | | Tube length (mm) | Input Voltage | | Lamp Capacity per Int. Surface Area (pF/m2) | Discharge Charge Quantity per Int. Surface Area (μC/m2) | Lamp Efficiency (lm/W) |
|---|---|---|---|---|---|---|---|---|---|---|---|
| | | | | Tube Diameter (mm) | | | p-p Value (kV) | Frequency (kHz) | | | |
| | | | | O.D. | I.D. | | | | | | |
| 1 | 1 | 0.5 | 1 | 2.6 | 2.0 | 160 | 1.40 | 20 | 4.8 | 39.0 | 21.0 |
| 2 | 2 | 0.9 | 1 | 2.6 | 2.0 | 160 | 1.25 | 30 | 2.8 | 29.0 | 21.7 |
| 3 | 3 | 1.7 | 1 | 2.6 | 2.0 | 160 | 1.25 | 30 | 2.4 | 19.0 | 26.3 |
| 4 | 4 | 2.5 | 1 | 2.6 | 2.0 | 160 | 1.25 | 30 | 2.3 | 15.2 | 28.0 |
| 5 | 5 | 3.3 | 1 | 2.6 | 2.0 | 160 | 1.25 | 30 | 2.1 | 12.5 | 29.7 |
| 6 | 6 | 3.1 | 1 | 3.0 | 2.0 | 160 | 1.50 | 20 | 1.0 | 12.7 | 38.6 |
| 7 | 7 | 3.1 | 1 | 3.0 | 2.0 | 160 | 1.50 | 20 | 1.0 | 11.4 | 32.9 |
| 8 | 8 | 3.1 | 1 | 3.0 | 2.0 | 160 | 2.00 | 20 | 0.5 | 7.1 | 48.6 |
| 9 | 9 | 3.1 | 1 | 3.0 | 2.0 | 160 | 2.00 | 20 | 0.9 | 12.2 | 36.6 |

[Table 3]

| Experimet No. | Outer Electrode No. | Outer Electrode No. | Internal Electrode | Bulb | | Tube length (mm) | Input Voltage | | Lamp Capacity per Int. Surface Area (pF/m2) | Discharge Charge Quantity per Int. Surface Area (μC/m2) | Lamp Efficiency (lm/w) |
|---|---|---|---|---|---|---|---|---|---|---|---|
| | | | | Tube Diameter (mm) | | | p-p Value (kV) | Frequency (kHz) | | | |
| | | | | O.D. | I.D. | | | | | | |
| 10 | 10 | 6.5 | 2 | 3.0 | 2.0 | 370 | 1.6 | | 0.80 | 7.79 | 36.6 |
| 11 | 10 | 6.5 | 2 | 3.0 | 2.0 | 370 | 1.8 | | 0.83 | 10.31 | 37.1 |
| 12 | 10 | 6.5 | 2 | 3.0 | 2.0 | 370 | 2 | | 0.81 | 12.14 | 37.2 |
| 13 | 10 | 6.5 | 2 | 3.0 | 2.0 | 370 | 2.2 | | 0.78 | 13.91 | 36.2 |
| 14 | 10 | 6.5 | 2 | 3.0 | 2.0 | 370 | 2.4 | | 0.78 | 14.78 | 35.9 |
| 15 | 10 | 6.5 | 2 | 3.0 | 2.0 | 370 | 2.6 | | 0.80 | 16.18 | 32.0 |
| 16 | 11 | 6.5 | 2 | 3.0 | 2.0 | 370 | 1.6 | | 0.93 | 11.00 | 31.4 |
| 17 | 11 | 6.5 | 2 | 3.0 | 2.0 | 370 | 1.8 | | 0.93 | 14.59 | 31.5 |
| 18 | 11 | 6.5 | 2 | 3.0 | 2.0 | 370 | 2 | | 0.84 | 16.27 | 31.2 |
| 19 | 11 | 6.5 | 2 | 3.0 | 2.0 | 370 | 2.2 | | 0.85 | 18.70 | 30.3 |
| 20 | 11 | 6.5 | 2 | 3.0 | 2.0 | 370 | 2.4 | | 0.92 | 19.85 | 28.5 |
| 21 | 11 | 6.5 | 2 | 3.0 | 2.0 | 370 | 2.6 | | 0.92 | 20.89 | 24.6 |
| 22 | 12 | 6.5 | 2 | 3.0 | 2.0 | 370 | 1.6 | | 1.05 | 9.86 | 33.1 |
| 23 | 12 | 6.5 | 2 | 3.0 | 2.0 | 370 | 1.8 | | 1.02 | 13.04 | 33.8 |
| 24 | 12 | 6.5 | 2 | 3.0 | 2.0 | 370 | 2 | | 0.92 | 14.91 | 33.0 |
| 25 | 12 | 6.5 | 2 | 3.0 | 2.0 | 370 | 2.2 | | 0.94 | 16.13 | 33.4 |
| 26 | 12 | 6.5 | 2 | 3.0 | 2.0 | 370 | 2.4 | | 0.98 | 17.80 | 31.3 |
| 27 | 12 | 6.5 | 2 | 3.0 | 2.0 | 370 | 2.6 | | 1.02 | 18.95 | 27.4 |
| 28 | 12 | 6.5 | 2 | 3.0 | 2.0 | 370 | 2.8 | | 1.05 | 19.29 | 24.7 |
| 29 | 13 | 6.5 | 2 | 3.0 | 2.0 | 370 | 1.6 | | 1.19 | 12.78 | 29.7 |

(continued)

| Experimet No. | Outer Electrode No. | Outer Electrode No. | Internal Electrode | Bulb | | | Input Voltage | | Lamp Capacity per Int. Surface Area (pF/m2) | Discharge Charge Quantity per Int. Surface Area (μC/m2) | Lamp Efficiency (lm/w) |
|---|---|---|---|---|---|---|---|---|---|---|---|
| | | | | Tube Diameter (mm) | | Tube length (mm) | p-p Value (kV) | Frequency (kHz) | | | |
| | | | | O.D. | I.D. | | | | | | |
| 30 | 13 | 6.5 | 2 | 3.0 | 2.0 | 370 | 1.8 | | 1.19 | 14.61 | 32.7 |
| 31 | 13 | 6.5 | 2 | 3.0 | 2.0 | 370 | 2 | | 1.09 | 18.60 | 29.0 |
| 32 | 13 | 6.5 | 2 | 3.0 | 2.0 | 370 | 2.2 | | 1.05 | 19.85 | 29.2 |
| 33 | 13 | 6.5 | 2 | 3.0 | 2.0 | 370 | 2.4 | | 1.19 | 21.37 | 25.6 |
| 34 | 13 | 6.5 | 2 | 3.0 | 2.0 | 370 | 2.6 | | 1.16 | 21.67 | 23.1 |
| 35 | 14 | 6.5 | 2 | 3.0 | 2.0 | 370 | 1.6 | | 0.85 | 6.84 | 40.4 |
| 36 | 14 | 6.5 | 2 | 3.0 | 2.0 | 370 | 1.8 | | 0.90 | 8.65 | 41.3 |
| 37 | 14 | 6.5 | 2 | 3.0 | 2.0 | 370 | 2 | | 0.86 | 10.08 | 42.1 |
| 38 | 14 | 6.5 | 2 | 3.0 | 2.0 | 370 | 2.2 | | 0.83 | 11.98 | 39.9 |
| 39 | 14 | 6.5 | 2 | 3.0 | 2.0 | 370 | 2.4 | | 0.84 | 12.55 | 40.5 |
| 40 | 14 | 6.5 | 2 | 3.0 | 2.0 | 370 | 2.6 | | 0.80 | 13.75 | 38.5 |
| 41 | 14 | 6.5 | 2 | 3.0 | 2.0 | 370 | 2.8 | | 0.82 | 14.85 | 35.1 |
| 42 | 14 | 6.5 | 2 | 3.0 | 2.0 | 370 | 3 | | 0.84 | 14.72 | 32.5 |

[Table 4]

| Experimet No. | Outer Electrode No. | Clearance Distance (mm) | Bulb | | | Input Voltage | | Lamp Capacity per Int. Surface Area (pF/m2) | Discharge Charge Quantity per Int. Surface Area ($\mu$C/m2) | Lamp Efficiency (lm/W) |
|---|---|---|---|---|---|---|---|---|---|---|
| | | | Tube diameter (mm) | | Tube length (mm) | p-p Value (kV) | Frequency (kHz) | | | |
| | | | O.D | I.D. | | | | | | |
| 43 | 10 | 6.5 | 4.0 | 3.0 | 370 | 2 | | 0.54 | 7.15 | 40.5 |
| 44 | 10 | 6.5 | 4.0 | 3.0 | 370 | 2.2 | | 0.58 | 9.39 | 40.7 |
| 45 | 10 | 6.5 | 4.0 | 3.0 | 370 | 2.4 | | 0.61 | 10.76 | 41.2 |
| 46 | 10 | 6.5 | 4.0 | 3.0 | 370 | 2.6 | | 0.59 | 11.81 | 40.2 |
| 47 | 10 | 6.5 | 4.0 | 3.0 | 370 | 2.8 | | 0.54 | 13.16 | 38.2 |
| 48 | 10 | 6.5 | 4.0 | 3.0 | 370 | 3 | | 0.56 | 13.46 | 30.3 |
| 49 | 11 | 6.5 | 4.0 | 3.0 | 370 | 2 | | 0.61 | 10.50 | 32.9 |
| 50 | 11 | 6.5 | 4.0 | 3.0 | 370 | 2.2 | | 0.62 | 13.78 | 33.5 |
| 51 | 11 | 6.5 | 4.0 | 3.0 | 370 | 2.4 | | 0.57 | 15.43 | 33.4 |
| 52 | 11 | 6.5 | 4.0 | 3.0 | 370 | 2.6 | | 0.59 | 16.59 | 31.6 |
| 53 | 11 | 6.5 | 4.0 | 3.0 | 370 | 2.8 | | 0.60 | 17.07 | 25.1 |
| 54 | 12 | 6.5 | 4.0 | 3.0 | 370 | 2 | | 0.61 | 9.99 | 36.6 |
| 55 | 12 | 6.5 | 4.0 | 3.0 | 370 | 2.2 | | 0.68 | 12.44 | 36.4 |
| 56 | 12 | 6.5 | 4.0 | 3.0 | 370 | 2.4 | | 0.68 | 13.73 | 36.4 |
| 57 | 12 | 6.5 | 4.0 | 3.0 | 370 | 2.6 | | 0.62 | 14.98 | 37.2 |
| 58 | 12 | 6.5 | 4.0 | 3.0 | 370 | 2.8 | | 0.61 | 15.96 | 33.1 |
| 59 | 12 | 6.5 | 4.0 | 3.0 | 370 | 3 | | 0.64 | 16.03 | 26.0 |
| 60 | 13 | 6.5 | 4.0 | 3.0 | 370 | 2 | | 0.66 | 12.60 | 33.4 |
| 61 | 13 | 6.5 | 4.0 | 3.0 | 370 | 2.2 | | 0.71 | 14.86 | 33.8 |
| 62 | 13 | 6.5 | 4.0 | 3.0 | 370 | 2.4 | | 0.61 | 16.70 | 33.2 |
| 63 | 13 | 6.5 | 4.0 | 3.0 | 370 | 2.6 | | 0.63 | 17.97 | 32.5 |

(continued)

| Experimet No. | Outer Electrode No. | Clearance Distance (mm) | Bulb | | | Input Voltage | | Lamp Capacity per Int. Surface Area (pF/m2) | Discharge Charge Quantity per Int. Surface Area ($\mu$C/m2) | Lamp Efficiency (lm/W) |
|---|---|---|---|---|---|---|---|---|---|---|
| | | | Tube diameter (mm) | | Tube length (mm) | p-p Value (kV) | Frequency (kHz) | | | |
| | | | O.D | I.D. | | | | | | |
| 64 | 13 | 6.5 | 4.0 | 3.0 | 370 | 2.8 | | 0.66 | 18.16 | 23.2 |
| 65 | 13 | 6.5 | 4.0 | 3.0 | 370 | 3 | | 0.63 | 18.30 | 21.4 |
| 66 | 14 | 6.5 | 4.0 | 3.0 | 370 | 2 | | 0.51 | 6.25 | 44.4 |
| 67 | 14 | 6.5 | 4.0 | 3.0 | 370 | 2.2 | | 0.53 | 7.67 | 45.6 |
| 68 | 14 | 6.5 | 4.0 | 3.0 | 370 | 2.4 | | 0.54 | 9.45 | 44.7 |
| 69 | 14 | 6.5 | 4.0 | 3.0 | 370 | 2.6 | | 0.52 | 10.26 | 44.4 |
| 70 | 14 | 6.5 | 4.0 | 3.0 | 370 | 2.8 | | 0.49 | 11.26 | 44.7 |
| 71 | 14 | 6.5 | 4.0 | 3.0 | 370 | 3 | | 0.50 | 11.90 | 44.6 |
| 72 | 14 | 6.5 | 4.0 | 3.0 | 370 | 3.2 | | 0.52 | 11.94 | 42.0 |

In experiments Nos. 1 to 9 shown in Table 2, the external electrodes 12 of Nos. 1 to 9 and bulbs 10 of Nos. 1, 2 were used, and the input voltage was 1.25 kV to 2.0 kV as the p-p value. Further, in experiments Nos. 10 to 42 shown in Table 3, the external electrodes 12 of Nos. 10 to 14 and the bulb 10 of No. 3 were used, and the input voltage was 1.6 kV to 3.0 kV as the p-p value. In experiments Nos. 43 to 72 shown in Table 4, the external electrodes 12 of Nos. 10 to 14 and the bulb 10 of No. 4 were used, and the input voltage was 2.0 kV to 3.2 kV as the p-p value. In all the experiments Nos. 1 to 72, the input voltage was from 1.25 kV to 3.2 kV as the p-p value.

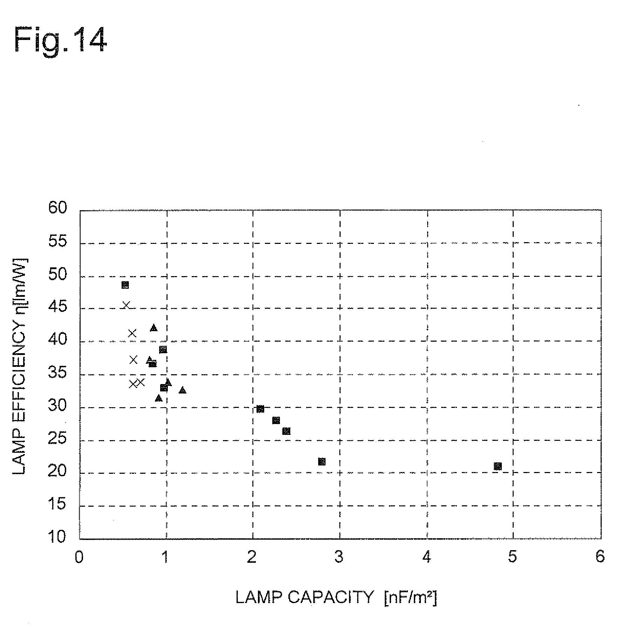

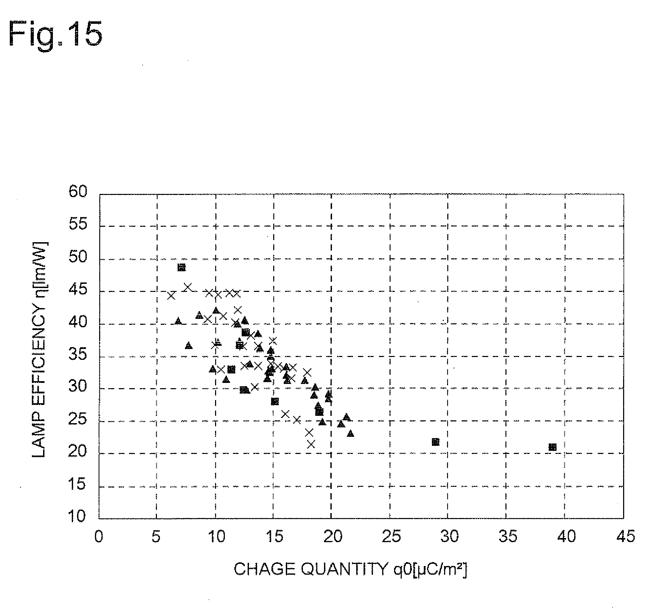

The measurement results on the lamp capacity per inner surface area "C0", discharge charge quantity per inner surface area "q0", and lamp efficiency "η" of experiments Nos. 1 to 72 are shown in Tables 2 to 4. Further, the measurement results on lamp capacity "C02 and lamp efficiency "η" are plotted as a graph in Fig. 14. The measurement results on discharge charge quantity "q0" and lamp efficiency "η" are plotted as a graph in Fig. 15. In Fig. 14 and Fig. 15, symbols "■" represent experiment Nos. 1 to 9 (Table 2), symbols "▲" represent experiments Nos. 10 to 42 (Table 3), and symbols "x" represent experiments Nos. 43 to 72 (Table 4).

Fig. 14 shows that in order to increase the lamp efficiency "η", attention should be paid to the lamp capacity "C0" per inner surface area of the bulb 10 formed by the internal electrode 11 and external electrode 12, rather than to the relationship between the values of "electrostatic capacity of the internal electrode 5 and discharge space" and "electrostatic capacity of the external electrode 5 and discharge space" as taught in Patent Publication 1. Specifically, it is understood that the lamp efficiency "η" increases as the lamp capacity C0 is decreased. More specifically, it is understood that where the lamp capacity "C0" becomes less than $2.8 \text{ nF/m}^2$ (test No. 2), lamp efficiency "η" increases significantly. In particular, where the lamp capacity "C0" becomes less than $2.4 \text{ nF/m}^2$ (test No. 3), the increase in lamp efficiency "η" is more remarkable.

Furthermore, Fig. 14 shows that the correlation between the lamp efficiency "η" and lamp capacity "C0" demonstrates the same trend even when the shape of the external electrode 12 is changed. Therefore, it is understood that the lamp efficiency depends on the lamp capacity "C0", regardless of the shape of the external electrode 12.

Although the minimum value of the lamp capacity "C0" is $0.5 \text{ nF/m}^2$ in the present experiment, because the discharge charge quantity decreases, that is, the lamp current decreases with the decrease in lamp capacity "C0", further decrease in lamp capacity "C0" would increase lamp efficiency. Further, the lower limit value of lamp capacity "C0" is determined by brightness required for each light-emitting device. Where the lamp capacity "C0" decreases, brightness per unit length of one lamp decreases, provided that the drive voltage is the same. Usually, brightness can be compensated by raising voltage or increasing the number of lamps, and the lower limit value of the lamp capacity for practical use is set only in the case where the brightness cannot be ensured due to limitations in performance or cost of the lighting circuits for respective light-emitting devices.

From Fig. 15, where the applied voltage is considered in addition to the lamp capacity C0 determined by the physical configuration of a dielectric barrier discharge lamp, that is, where focusing on the discharge charge quantity per inner surface area of bulb 10 and per one discharge "q0", the lamp efficiency "η" increases as the discharge charge quantity "q0" decreases. Specifically, where the discharge charge quantity "q0" is less than $29.0 \text{ } \mu\text{C/m}^2$ (test No. 2), the lamp efficiency "η" increases significantly. In particular, where the discharge charge quantity "q0" becomes less than $21.67 \text{ } \mu\text{C/m}^2$ (test No. 34), the increase in lamp efficiency "η" is more remarkable.

A specific feature of experiments Nos. 1 to 72 is that, as described above, the input voltage is set within a range generally required to maintain lighting and the discharge charge quantity "q0" is reduced by decreasing the lamp capacity "C0" (e.g. by decreasing the clearance distance "d"), rather than setting the input voltage low to reduce the discharge charge quantity "q0". It is estimated that by not reducing the input voltage, an electric field intensity "E" (proportional to input voltage and lamp voltage "V0") applied inside the tube is maintained high, resulting in that a large amount of xenon is excited to a metastable stable state. Further, it is estimated that the decreased discharge charge quantity "q0"prevent the ionization of xenon and raise the lamp efficiency "η" above the conventionally predicted level.

The present invention was achieved as a result of the above-described experiments based on the below-described theoretical considerations. It is generally know that the lamp efficiency "η" increases with the decreases of a lamp current "I". However, where the physical configuration of a dielectric barrier discharge lamp is determined, there is an optimum lamp voltage "V0" at which the maximum lamp efficiency "η" for the given configuration can be obtained. Thus, even if the lamp voltage is further decreased from the optimum lamp voltage "V0" to decrease the lamp current "I", the lamp efficiency does not rise. In view of this, the inventors reached an idea that reducing lamp current "I" (discharge charge quantity "q0"), while maintaining a high electric field intensity "E", would further increase the efficiency, and conceived a configuration with reduced lamp capacity "C0" as a configuration for increasing the electric field intensity "E". In other words, the present inventors conceived that the configuration for reducing the charge quantity "Q", while maintaining the high electric field intensity "E", could be attained by the configuration in which the lamp voltage is set within a range necessary to maintain lighting and also within a range of practical use of a lamp product while the lamp capacity "C0" is decreased (a configuration in which the clearance distance "d" between the bulb 10 and the external electrode 12 is increased or in which the dielectric constant of the external electrode 12 and the discharge space within the bulb 10 is decreased). As a result of measuring the actual lamp efficiency "η" in such configuration, values of the lamp capacity "C0" and discharge charge quantity "q0" that achieved greatly increased lamp efficiency as shown in Fig. 14 and Fig. 15 were newly discovered.

A practical way for realizing the range of lamp capacity "C0" in which the lamp efficiency is remarkably increased is to increase the clearance distance "d" between the external electrode 12 and bulb 10. This is because that the air has the lowest dielectric constant of the presently known substances and that the clearance distance "d" can be increased by merely disposing the external electrode 12 at a distance from the bulb 10.

Referring to Fig. 1A, the dielectric barrier discharge lamp device 100 of the present embodiment constitutes part of a backlight device 700, which is a surface light source device for a liquid crystal display device 900, and is disposed at a light incidence surface 701a side of a diffusion plate 701. In Figs. 1A and 2A, a plurality of dielectric barrier discharge lamps device 100A, 100B are arranged parallel to each other in the direction perpendicular to the paper sheet. A diffusion sheet 702 for scattering the light, a prism sheet 703 for limiting the orientation of the emitted light, and a polarization sheet 704 for limiting the polarization of the emitted light are disposed in a stacked state at the side of a light emission surface 701b of the diffusion plate 701. The dielectric barrier discharge lamp device 100, diffusion plate 701, and optical sheets 702 to 704 are accommodated in a casing 705. A liquid crystal panel 800 is disposed on the front surface of the polarization sheet 704. The light emitted by the dielectric barrier discharge lamp device 100 goes out from the light emission surface 701b of the diffusion plate 701, passes through the optical sheets 702 to 704, and illuminates the liquid crystal panel 800 from a back surface side thereof.

The backlight device 700 was explained regarding the backlight for the liquid crystal display device, but it can be also used as a surface light source other than that for the liquid crystal display device. For example, it can be used for a backlight for a signboard, an indoor illumination source, and an illumination light source for a vehicle.

INDUSTRIAL APPLICABILITY

The dielectric barrier discharge lamp in accordance with the present invention is suitable as a backlight source for liquid crystal display devices, a backlight source for a signboard, an indoor illumination source, and an illumination light source for a vehicle.

**Claims**

1.   A dielectric barrier discharge lamp comprising:

    a bulb enclosing a discharge medium containing a rare gas; and
    a first electrode and a second electrode arranged for the bulb,

    wherein a lamp capacity per inner surface area of the bulb between the first and second electrodes is less than 2.8 $nF/m^2$.

2.   A dielectric barrier discharge lamp according to claim 1, wherein the lamp capacity per inner surface area of the bulb is less than 2.4 $nF/m^2$.

3.   A dielectric barrier discharge lamp according to claim 1, wherein the first electrode is arranged inside the bulb and the second electrode is arranged outside the bulb.

4.   A dielectric barrier discharge lamp according to claim 3, wherein the second electrode is arranged at a distance from the bulb.

5.   A dielectric barrier discharge lamp comprising:

    a bulb enclosing a discharge medium containing a rare gas;
    a first electrode and a second electrode arranged for the bulb; and
    a lighting circuit for applying an alternating voltage between the first and second electrodes so as to repeatedly generate dielectric discharge for causing light emission by plasmanizing the rare gas,

    wherein a discharge charge quantity per one discharge and per inner surface area of the bulb between the first and second electrodes is less than $29\mu$ $C/m^2$.

6.   A dielectric barrier discharge lamp according to claim 5, wherein a peak-to-peak value of a voltage applied by the lighting circuit between the first and second electrodes is 1.25 kV or more and 3.2 kV or less.

7. A dielectric barrier discharge lamp according to claim 5, wherein the first electrode is arranged inside the bulb and the second electrode is arranged outside the bulb.

8. The dielectric barrier discharge lamp according to claim 7, wherein the second electrode is arranged at a distance from the bulb.

9. A backlight device comprising:

the dielectric barrier discharge lamp according to any one of claims 1 through 8; and
a diffusion plate that has a light incidence surface and a light emission surface and serves to transmit a light emitted from the dielectric barrier discharge lamp from the light incidence surface to the light emission surface so that the light is emitted from the light emission surface.

10. A liquid crystal display device comprising:

the backlight device according to claim 9; and
a liquid crystal panel disposed opposite the light emission surface of the diffusion plate.

# Fig.1A

# Fig.1B

# Fig.2

100

10

13

12

15

# Fig.3

INTERNAL ELECTRODE 11

DISCHARGE SPACE

FLUORESCENT
LAYER 13

BULB 10

EXTERNAL ELECTRODE 12

CAPACITOR L

LAMP CAPACITY C0

# Fig.4A

300

11

13  10  12

16

14

15

# Fig.4B

INTERNAL
ELECTRODE 11

CAPACITOR L

LAMP
CAPACITY C0

EXTERNAL
ELECTRODE 12

V1

ELECTROSTATIC
CAPACITY C16

V2

CAPACITOR 16

# Fig.5

CHARGE Q

POINT D ( V 0 d )

AREA S

POINT C ( V 0 c )

80

60

40

20

0

-2500          -1500          -500          500          1500          2500          LANP VOLTAGE VO

-20

POINT B ( V 0 b )

-40

ΔQ

ΔV

-60

POINT A ( V 0 a )

-80

## Fig.6A

## Fig.6B

## Fig.7A

## Fig.7B

Fig.8

Fig.9

Fig.10A

Fig.10B

Fig.11A

Fig.11B

Fig.12A

Fig.12B

Fig.13A

Fig.13B

Fig.14

# Fig.15

# Fig.16

1

4

5

8

6

2

## INTERNATIONAL SEARCH REPORT

| | International application No. |
|---|---|
| | PCT/JP2007/051151 |

A. CLASSIFICATION OF SUBJECT MATTER
*H01J65/00(2006.01)i, H05B41/24(2006.01)i*

According to International Patent Classification (IPC) or to both national classification and IPC

B. FIELDS SEARCHED

Minimum documentation searched (classification system followed by classification symbols)
H01J65/00-65/08, H05B41/00-41/46

Documentation searched other than minimum documentation to the extent that such documents are included in the fields searched

| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 7-288110 A  (Ushio Inc.),<br>31 October, 1995 (31.10.95),<br>Scope of claims; Claim 1; Detailed Explanation of the Invention; Par. Nos. [0005] to [0007], [0012]; Figs. 1 to 3<br>(Family: none) | 1-4,9,10 |
| A | JP 2002-25506 A  (Matsushita Electric Industrial Co., Ltd.),<br>25 January, 2002 (25.01.02),<br>Scope of claims; Claims 1, 3; Detailed Explanation of the Invention; Par. Nos. [0002], [0003], [0011], [0016], [0025], [0028], [0029], [0036], [0037], [0048] to [0051]; Figs. 1 to 3, 8, 11<br>(Family: none) | 1-4,9,10 |

| ☒ Further documents are listed in the continuation of Box C. | ☐ See patent family annex. |

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>19 February, 2007 (19.02.07) | Date of mailing of the international search report<br>27 February, 2007 (27.02.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| | International application No. |
|---|---|
| | PCT/JP2007/051151 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-63125 A (Harison Toshiba Lighting Corp.), 26 February, 2004 (26.02.04), Scope of claims; Claim 1; Detailed Explanation of the Invention; Par. Nos. [0013], [0019], [0037] to [0040]; Figs. 1 to 3 & WO 2004/012481 A1 | 5-10 |
| A | WO 2005/022586 A1 (Matsushita Electric Industrial Co., Ltd.), 10 March, 2005 (10.03.05), Abstract (Family: none) | 1-10 |

Form PCT/ISA/210 (continuation of second sheet) (April 2005)

**EP 1 981 062 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002208379 A